# FASCICULE DE BREVET EUROPEEN

(11) **EP 3 310 730 B1**
(45) Date de publication et mention de la délivrance du brevet: **06.08.2025**
(21) Numéro de dépôt: 16741089.3
(22) Date de dépôt: 17.06.2016
(51) Int. Cl.: C03C 17/23, B32B 17/00, C03C 17/34, H01Q 15/00, H04B 7/00

(54) **PROCÉDÉ D'AUGMENTATION DE LA TRANSMISSION D'ONDES ÉLECTROMAGNÉTIQUES RADIOFRÉQUENCES A TRAVERS DES VITRES THERMIQUEMENT ISOLANTES**
VERFAHREN ZUR ERHÖHUNG DER ÜBERTRAGUNG VON ELEKTROMAGNETISCHEN HOCHFREQUENZWELLEN DURCH THERMISCH ISOLIERENDE GLASSCHEIBEN
METHOD FOR INCREASING THE TRANSMISSION OF RADIOFREQUENCY ELECTROMAGNETIC WAVES THROUGH THERMALLY INSULATING GLASS SHEETS

(30) Priorité: 19.06.2015 FR 1555638
(43) Date de publication de la demande: 25.04.2018
(73) Titulaire: Centre Technique de l'Industrie des Papiers, Cartons et Celluloses, 38044 Grenoble Cedex 9 (FR); Université Grenoble Alpes, 38400 Saint-Martin-d'Hères (FR); Institut Polytechnique de Grenoble, 38000 Grenoble (FR)
(72) Inventeur: NIEMBRO, Alejandro, 38000 Grenoble (FR); EYMIN-PETOT-TOURTOLLET, Guy, 38570 Tencin (FR); PISTONO, Emmanuel, 38420 Domene (FR); LEMAITRE-AUGER, Pierre, 26120 Malissard (FR); VUONG, Tan-Phu, 38400 Saint Martin D'heres (FR)
(74) Mandataire: Hautier IP
(86) Numéro de dépôt international: PCT/FR2016/051489
(87) Numéro de publication internationale: WO 2016/203180

(56) Documents cités:
- WO-A1-2014/060203
- US-A- 5 364 685
- US-A1- 2003 080 909
- US-A1- 2011 210 903
- US-A1- 2014 370 210

## Description

La présente demande de brevet revendique la priorité de la demande de brevet français FR15/55638.

### Domaine

La présente demande concerne la transmission d'ondes électromagnétiques radiofréquences à travers un vitrage dont une face est revêtue d'une couche conductrice, et plus particulièrement un vitrage thermiquement isolant dont une face est revêtue d'un oxyde métallique.

### Exposé de l'art antérieur

Des filtres destinés au blindage d'une pièce ou d'un bâtiment à l'encontre de certaines ondes électromagnétiques ont été réalisés. De tels filtres peuvent être constitués de films faisant écran aux fréquences porteuses des systèmes de télécommunication sans fil.

Ce type de film à motif périodique d'éléments conducteurs est appelé surface sélective en fréquence, et est généralement désigné dans la technique par le sigle FSS, de l'anglais "Frequency Selective Surface", cf. US 2003/080909, WO 2014/060203 ou US 5 364 685.

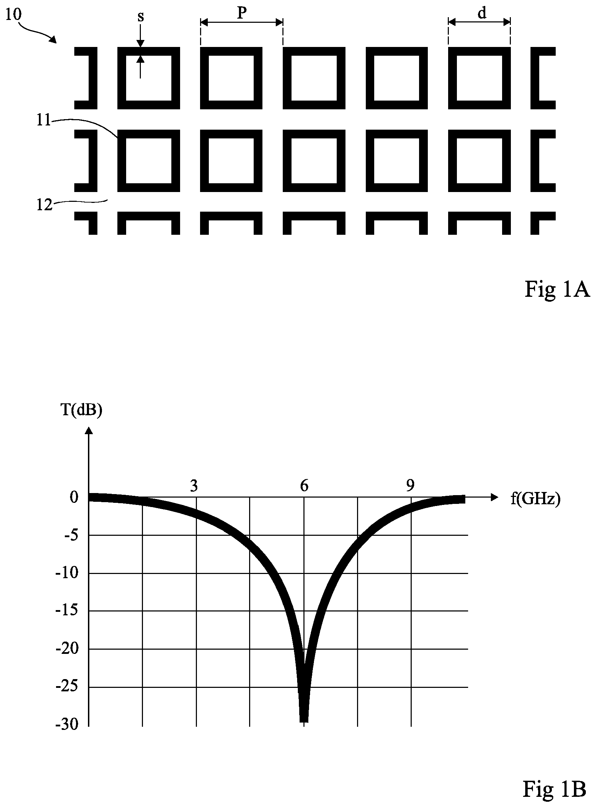

La figure 1A expose une réalisation d'un film FSS 10 comprenant un motif d'éléments conducteurs 11 répété périodiquement dans les directions verticale et horizontale, et disposé sur un support diélectrique 12. Chaque élément 11 du motif a la forme d'un carré à centre vide. Chaque côté du carré a une longueur d et une largeur s. Les carrés se répètent à un pas p.

Le motif de la figure 1A est par exemple décrit dans l'article de R.J. Langley, E.A. Parker, "Equivalent circuit model for arrays of square loops" - ELECTRONIC LETTERS 01.04.1982, Vol. 18, N° 7.

La figure 1B est une courbe illustrant la transmission T (en décibels), en fonction de la fréquence f (en GHz), d'un film FSS du type de celui de la figure 1A quand ce film est placé sur une cloison ou une vitre. Cette courbe de transmission présente un pic d'atténuation maximale à la fréquence du zéro de transmission, le gain en décibels étant sensiblement nul ailleurs. L'article susmentionné indique que la longueur d'onde correspondant à la fréquence du zéro de transmission est sensiblement égale au périmètre d'un carré 11.

A l'inverse, des filtres destinés à compenser le blindage involontaire d'une pièce ou d'un bâtiment à l'encontre de certaines ondes électromagnétiques ont été réalisés. En effet, des vitrages revêtus d'une couche d'oxyde métallique s'avèrent particulièrement efficaces pour l'isolation thermique mais atténuent fortement les ondes électromagnétiques radiofréquences.

L'article de G.I. Kiani, L.G. Olsson, A. Karlsson, K.P Esselle, M Nilsson, "Cross-Dipole Bandpass Frequency Selective Surface for Energy Saving Glass Used in Buildings" - IEEE TRANSACTION ON ANTENNAS AND PROPAGATION, fev. 2011, Vol. 59, N° 2, décrit un motif périodique d'ouvertures gravées dans la couche d'oxyde métallique d'un tel vitrage qui permet de limiter l'atténuation pour certaines fréquences RF. L'article mentionne néanmoins que cette gravure a pour conséquence une dégradation notable de l'isolation thermique du vitrage.

### Résumé

Ainsi, il existe un besoin de compenser, pour certaines fréquences RF, l'atténuation des ondes électromagnétiques due à des vitrages revêtus d'une couche d'oxyde métallique sans modifier les performances d'isolation thermique de ces vitrages.

Un mode de réalisation prévoit un vitrage comprenant une vitre dont une face est revêtue d'une couche conductrice, comportant à une distance non nulle de la couche conductrice un motif périodique d'éléments conducteurs adapté à augmenter, pour une fréquence déterminée, la transmission d'ondes électromagnétiques radiofréquences, ledit motif périodique étant choisi pour présenter un zéro de transmission à une fréquence comprise entre la moitié et sensiblement le double de la fréquence à amplifier.

Par ailleurs, le motif périodique d'éléments conducteurs est formé sur un support diélectrique souple et transparent.

Selon un mode de réalisation, le support diélectrique est adhérent au verre.

Selon un mode de réalisation, chaque élément conducteur a la forme d'un carré à centre vide.

Selon un mode de réalisation, chaque élément conducteur a une forme circulaire.

Selon un mode de réalisation, le vitrage comprend deux ou trois vitres, et la couche conductrice est formée sur une face interne d'une vitre.

Selon un mode de réalisation, la couche conductrice a une résistance de 1 à 1000 Ω/□.

Selon un mode de réalisation, la couche conductrice est une couche d'un oxyde métallique ou d'un polymère.

Un mode de réalisation prévoit un procédé d'amplification de la transmission à une fréquence déterminée d'un vitrage comprenant une vitre dont une face est revêtue d'une couche conductrice, consistant à revêtir une paroi du vitrage d'un motif périodique d'éléments conducteurs, adapté à augmenter, pour une fréquence déterminée, la transmission d'ondes électromagnétiques radiofréquences, ledit motif périodique étant choisi pour présenter un zéro de transmission à une fréquence comprise entre la moitié et sensiblement le double de la fréquence à amplifier.

Selon un mode de réalisation, ladite fréquence déterminée est une fréquence utilisée par des systèmes de télécommunications.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1A représente un film FSS comprenant un motif périodique d'éléments conducteurs sur un support diélectrique ;
la figure 1B est une courbe illustrant la transmission en fonction de la fréquence d'un film FSS du type de celui de la figure 1A ;
la figure 2 est une vue en coupe d'un mode de réalisation d'un double-vitrage thermiquement isolant équipé d'un film FSS ; et
la figure 3 illustre l'évolution de la transmission T en fonction de la fréquence, dans diverses conditions, d'un vitrage dont une face est revêtue d'une couche d'oxyde métallique.

De mêmes éléments ont été désignés par de mêmes références aux différentes figures et, de plus, les diverses figures ne sont pas tracées à l'échelle.

### Description détaillée

Dans la description qui suit, les expressions "sensiblement", et "environ" signifient à 10 % près, de préférence à 5 % près.

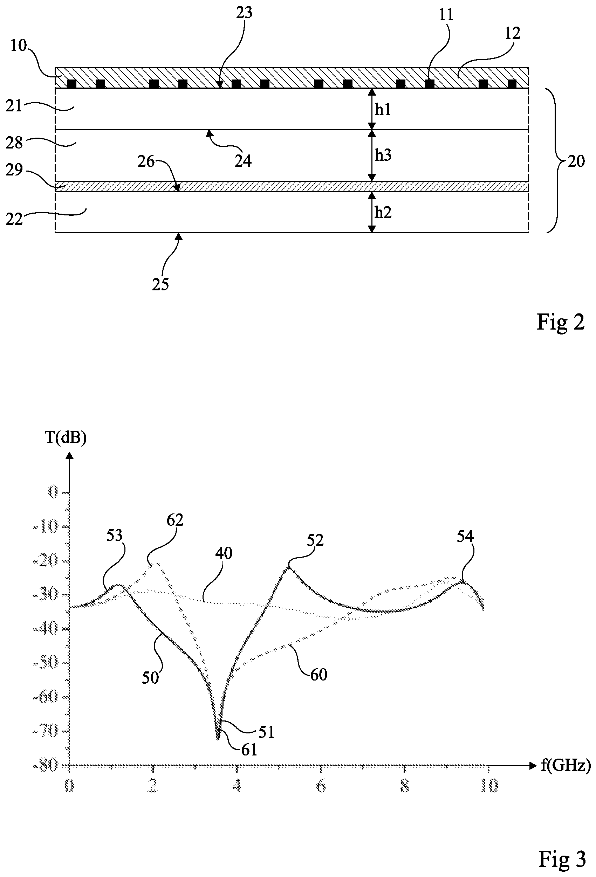

La figure 2 est une vue en coupe d'un double-vitrage 20 thermiquement isolant. Le double-vitrage 20 comprend une première vitre 21 et une seconde vitre 22 parallèles. La vitre 21 a une épaisseur h₁, une face externe 23 et une face interne 24. La vitre 22 a une épaisseur h₂, une face externe 25 et une face interne 26. Les faces internes 24 et 26 en regard sont séparées par une épaisseur h₃ de gaz 28 pouvant être en dépression. La face interne 26 de la vitre 22 est revêtue d'une couche d'oxyde métallique 29.

En pratique, les éléments susmentionnés d'un double-vitrage sont reliés par un cadre, l'ensemble formant une fenêtre, une porte ou autre cloison. Il n'est pas possible de modifier l'assemblage sans détruire le produit. Les valeurs des paramètres h₁, h₂ et h₃ sont donc imposées par le fabriquant.

En figure 2 un film FSS 10 comprenant un motif d'éléments conducteurs 11 et un support diélectrique 12, est placé contre la face externe 23 de la vitre 21. Le motif 11 correspond par exemple à celui de la figure 1A.

La figure 3 illustre l'évolution, en fonction de la fréquence f (en GHz), de la transmission T (en décibels) d'un double-vitrage 20 dont une face est revêtue d'une couche d'oxyde métallique 29, dans diverses conditions. Les valeurs de la transmission correspondent à un double-vitrage 20 tel que représenté en figure 2, dont les paramètres valent : h₁ = 4 mm, h₂ = 6 mm, et h₃ = 16 mm.

La courbe 40 correspond à un double-vitrage 20 dont une face est revêtue d'une couche d'oxyde métallique 29, en l'absence d'un film FSS. La courbe 40 montre qu'il existe alors une atténuation sensiblement constante de la transmission, d'environ 35 dB.

La courbe 50 illustre la transmission d'un double-vitrage 20 dont une face est revêtue d'une couche d'oxyde métallique 29, équipé d'un film FSS 10 sur la face externe 23 de la vitre 21, comme représenté par la figure 2. On observe alors sur la transmission atténuée par le double-vitrage 20 un pic d'atténuation 51 similaire à celui de la figure 1B. On observe en outre un pic d'amplification 52 ainsi que deux lobes de faible amplification 53 et 54. Le pic d'atténuation 51 est situé à la fréquence d'atténuation du film FSS 10. Le pic d'amplification 52 est situé à une fréquence supérieure mais proche de la fréquence d'atténuation et a une amplitude d'environ 10 dB supérieure à l'atténuation moyenne correspondant à la courbe 40. Les lobes d'amplification 53 et 54 sont situés de part et d'autre et à des fréquences éloignées de la fréquence d'atténuation, leurs amplitudes sont d'environ 3 dB par rapport à l'atténuation moyenne correspondant à la courbe 40.

La courbe 60 illustre la transmission d'un double-vitrage 20 dont une face est revêtue d'une couche d'oxyde métallique, équipé d'un film FSS 10 sur la face externe 25 de la vitre 22. On observe alors sur la transmission atténuée par le double-vitrage 20, un pic d'atténuation 61 similaire à celui de la figure 1B ainsi qu'un pic d'amplification 62. Le pic d'atténuation 61 est situé à la fréquence d'atténuation du film FSS 10. Le pic d'amplification 62 est situé à une fréquence inférieure mais proche de la fréquence d'atténuation et a une amplitude d'environ 10 dB supérieure à l'atténuation moyenne correspondant à la courbe 40.

Il apparaît donc qu'un film FSS placé contre un double-vitrage dont une face distante de ce film est revêtue d'une couche conductrice d'oxyde métallique introduit non seulement un zéro de transmission, mais aussi un pic d'amplification voisin du zéro de transmission.

Des essais et simulations effectués par les inventeurs montrent que, pour un double-vitrage donné (dont les paramètres h₁, h₂ et h₃ sont fixés), il existe toujours un pic d'amplification voisin du zéro de transmission. La distance fréquentielle entre le zéro de transmission et le pic d'amplification dépend des paramètres du vitrage et peut être déterminée par des calculs impliquant des étapes de simulation. Dans le cas de motifs FSS en boucle du type de celui représenté en figure 1A, si on appelle f₀ la fréquence du pic d'amplification, la fréquence du zéro de transmission est comprise entre sensiblement f₀/2 et 2f₀.

Plus particulièrement, le calcul de la position du pic d'amplification (résonance) se fait à l'aide d'un logiciel de calcul de simulations électromagnétiques du commerce (du type HFSS ou CST). La première étape de la méthode consiste à faire une modélisation physique en 3 dimensions de la structure FSS (par exemple à l'aide du principe du théorème de Floquet) superposée à la vitre et située à une distance non nulle de la couche faiblement conductrice d'oxyde métallique. Pour positionner le pic d'amplification, la seconde étape consiste à optimiser les dimensions de la structure FSS d'une manière itérative en faisant varier les dimensions de la structure FSS.

On rappelle que de nombreuses études indiquent comment déterminer les éléments d'un motif FSS pour obtenir un pic d'atténuation à une fréquence désirée. Comme cela a été indiqué précédemment, dans le cas d'un motif correspondant à celui de la figure 1A, la longueur d'onde correspondant à la fréquence d'atténuation est sensiblement égale au périmètre d'un élément conducteur de ce motif.

On attribue la présence de ces pics d'amplification à l'adaptation de l'impédance de la fenêtre à isolation renforcée à celle de l'air (377 Ohm) grâce aux structures FSS déposées à une distance non nulle de la couche conductrice.

Des modes de réalisation particuliers ont été décrits. Diverses variantes et modifications apparaîtront à l'homme de l'art.

Les motifs FSS décrits précédemment sont formés sur un support ou film diélectrique souple et transparent qui pourra être adhérent au verre afin d'être appliqué sur des vitrages définitivement assemblés, éventuellement déjà montés. Ces motifs FSS pourront aussi être formés directement sur une vitre.

La fréquence du pic d'amplification correspondra par exemple à une fréquence utilisée par des systèmes de télécommunications.

Les éléments conducteurs répartis selon le motif représenté par la figure 1A peuvent avoir une forme autre que carrée, par exemple une forme circulaire, voire rectiligne.

De plus, on a décrit un mode de réalisation dans lequel l'invention est appliquée à un double vitrage. L'invention s'applique également au cas d'un triple vitrage thermiquement isolant ou même d'une simple vitre dont une face est revêtue d'une couche conductrice ayant par exemple une fonction antireflet. Cette couche conductrice aura par exemple une résistance de 1 à 1000 Ω/□. Cette couche ne sera pas nécessairement un oxyde métallique. Ce sera par exemple un polymère ou un multicouche dans le cas d'un antireflet.

## Revendications

1. Vitrage comprenant une vitre dont une face est revêtue d'une couche conductrice (29), **caractérisé en ce qu'**il comporte à une distance non nulle de la couche conductrice un motif périodique d'éléments conducteurs (11) adapté à augmenter, pour une fréquence déterminée, la transmission d'ondes électromagnétiques radiofréquences, ledit motif périodique étant choisi pour présenter un zéro de transmission à une fréquence comprise entre la moitié et le double de la fréquence à amplifier, le motif périodique d'éléments conducteurs étant formé sur un support diélectrique souple et transparent (12).

2. Vitrage selon la revendication 1, dans lequel le support diélectrique est adhérent au verre.

3. Vitrage selon l'une quelconque des revendications 1 à 2, dans lequel chaque élément conducteur a la forme d'un carré à centre vide.

4. Vitrage selon l'une quelconque des revendications 1 à 2, dans lequel chaque élément conducteur a une forme circulaire.

5. Vitrage selon l'une quelconque des revendications 1 à 4, comprenant deux ou trois vitres, dans lequel la couche conductrice est formée sur une face interne d'une vitre.

6. Vitrage selon l'une quelconque des revendications 1 à 5, dans lequel la couche conductrice a une résistance de 1 à 1000 Ω/□.

7. Vitrage selon la revendication 6, dans lequel la couche conductrice est une couche d'un oxyde métallique ou d'un polymère.

8. Procédé d'amplification de la transmission à une fréquence déterminée d'un vitrage comprenant une vitre dont une face est revêtue d'une couche conductrice (29), consistant à revêtir une paroi du vitrage d'un motif périodique d'éléments conducteurs (11), adapté à augmenter, pour une fréquence déterminée, la transmission d'ondes électromagnétiques radiofréquences, ledit motif périodique étant choisi pour présenter un zéro de transmission à une fréquence comprise entre la moitié et le double de la fréquence à amplifier, le motif périodique d'éléments conducteurs étant formé sur un support diélectrique souple et transparent (12).

9. Procédé selon la revendication 8, dans lequel ladite fréquence déterminée est une fréquence utilisée par des systèmes de télécommunications.

## Patentansprüche

1. Verglasung, umfassend eine Scheibe, deren eine Seite mit einer leitenden Schicht (29) beschichtet ist, **dadurch gekennzeichnet, dass** sie in einem Abstand von nicht null zu der leitenden Schicht ein periodisches Muster von leitenden Elementen (11) aufweist, das dazu geeignet ist, für eine bestimmte Frequenz die Übertragung von elektromagnetischen Radiofrequenzwellen zu erhöhen, wobei das periodische Muster so gewählt ist, dass es eine Übertragungsnull bei einer Frequenz zwischen der Hälfte und dem Doppelten der zu verstärkenden Frequenz umfasst, wobei das periodische Muster aus leitenden Elementen auf einem flexiblen und transparenten dielektrischen Träger (12) gebildet ist.

2. Verglasung nach Anspruch 1, wobei der dielektrische Träger am Glas haftet.

3. Verglasung nach einem der Ansprüche 1 bis 2, wobei jedes leitende Element die Form eines Quadrats mit leerer Mitte hat.

4. Verglasung nach einem der Ansprüche 1 bis 2, wobei jedes leitende Element eine kreisförmige Form besitzt.

5. Verglasung nach einem der Ansprüche 1 bis 4, umfassend zwei oder drei Scheiben, wobei die leitende Schicht auf einer Innenseite einer Scheibe gebildet ist.

6. Verglasung nach einem der Ansprüche 1 bis 5, wobei die leitende Schicht einen Widerstand von 1 bis 1000 Ω/□ besitzt.

7. Verglasung nach Anspruch 6, wobei die leitende Schicht eine Schicht aus einem Metalloxid oder einem Polymer ist.

8. Verfahren zur Verstärkung der Übertragung bei einer bestimmten Frequenz einer Verglasung, umfassend eine Scheibe, deren eine Seite mit einer leitenden Schicht (29) beschichtet ist, bestehend aus dem Beschichten einer Wand der Verglasung mit einem periodischen Muster von leitenden Elementen (11), das dazu geeignet ist, für eine bestimmte Frequenz die Übertragung von elektromagnetischen Radiofrequenzwellen zu erhöhen, wobei das periodische Muster so gewählt ist, dass es eine Übertragungsnull bei einer Frequenz zwischen der Hälfte und dem Doppelten der zu verstärkenden Frequenz aufweist, wobei das periodische Muster aus leitenden Elementen auf einem flexiblen und transparenten dielektrischen Träger (12) gebildet ist.

9. Verfahren nach Anspruch 8, wobei die bestimmte Frequenz eine Frequenz ist, die von Telekommunikationssystemen verwendet wird.

## Claims

1. A glazing comprising a glazing sheet one face of which is coated with a conductive layer (29), **characterised in that** it includes, at a non-zero distance from the conductive layer, a periodic pattern of conductive elements (11) adapted to increase, for a determined frequency, transmission of radiofrequency electromagnetic waves, said periodic pattern being chosen to have a transmission zero at a frequency between half and twice the frequency to be amplified, the periodic pattern of conductive elements being formed on a flexible and transparent dielectric support (12).

2. The glazing according to claim 1, wherein the dielectric support is adhering to the glass.

3. The glazing according to any of claims 1 to 2, wherein each conductive element has the shape of a square with an empty centre.

4. The glazing according to any of claims 1 to 2, wherein each conductive element has a circular shape.

5. The glazing according to any of claims 1 to 4, comprising two or three glazing sheets, wherein the conductive layer is formed on an inner face of a glazing sheet.

6. The glazing according to any of claims 1 to 5, wherein the conductive layer has a resistance of 1 to 1000 Ω/□.

7. The glazing according to claim 6, wherein the conductive layer is a layer of a metal oxide or a polymer.

8. Method for amplifying transmission at a determined frequency of a glazing comprising a glazing sheet one face of which is coated with a conductive layer (29), consisting in coating a wall of the glazing with a periodic pattern of conductive elements (11), adapted to increase, for a determined frequency, transmission of radiofrequency electromagnetic waves, said periodic pattern being chosen to have a transmission zero at a frequency between half and twice the frequency to be amplified, the periodic pattern of conductive elements being formed on a flexible and transparent dielectric support (12).

9. The method according to claim 8, wherein said determined frequency is a frequency used by telecommunication systems.
